# EUROPÄISCHE PATENTANMELDUNG

(11) **EP 0 800 020 A1**
(43) Veröffentlichungstag der Anmeldung: **08.10.1997**
(21) Anmeldenummer: 97104995.2
(22) Anmeldetag: 25.03.1997
(51) Int. Cl.: F16H 25/24, F16D 3/00

(54) **Vorrichtung zur Schubbewegung eines Gleitkörpers**

(30) Priorität: 01.04.1996 DE 19612938
(71) Anmelder: EASTMAN KODAK COMPANY, Rochester, New York 14650 (US); KODAK AKTIENGESELLSCHAFT, D-70323 Stuttgart (DE)
(72) Erfinder: Dickhoff, Andreas, 73230 Kirchheim-Teck (DE)
(74) Vertreter: Lewandowsky, Klaus, Dipl.-Ing.

(57) **Abstract**

The device serves for the translatory motion with accuracy of feed of a slide (11) movable by means of a threaded spindle (14) fixedly mounted for rotation, wherein a ring nut (16) axially movable on the threaded spindle is connected to the slide (11), by providing a compensating coupling (10) of cardanic action between the ring nut (16) and the slide (11).

In particular, the compensating coupling (10) consists of a body (17) which is circular or square in cross section and has a central axis (18), in which body two universal joints (1a, 1b and 2a, 2 b or 3a, 3b and 4a, 4b) arranged one behind the other are composed by diametrically mutually opposed radial slits (A, B; E, F) and by further diametrically mutually opposed radial slits (C, D; G, H) which are staggered axially and through 90 angular degrees.

The slits in each case composing a universal joint are arranged at an acute angle to the central axis (18) of the body (17). The four joints of a universal joint are on a plane (24, 25) extending perpendicular to the central axis (18) of the body (17).

## Beschreibung

The invention relates to a device for the translatory displacement of a slide movable by means of a threaded spindle fixedly mounted for rotation, wherein a ring nut axially movable on the threaded spindle is connected to the slide.

For accurate and faultless recordings, for instance the scanning of dia-positives for producing pictures or transparencies, the movement of the slide has to be maintained free of pitch errors, out-of-roundness and non-linearity of the threaded spindle.

German Utility Model 92 02 166 describes a bush-like drive element that is engageable with a threaded shaft and at each of its ends takes the form of a nut with mutually offset thread starts.

The bush-like drive element is provided with a flexible bush portion that is situated between and is integral with the nuts and has circumferentially extending slits mutually offset in the axial direction.

The depth, number, length and breadth of the slits has to be selected in such a way that the stiffness of the flexible bush portion is less in the axial direction than in the radial direction. Three slits are provided which traverse the jacket of the flexible bush portion and extend overlappingly in the circumferential direction of the jacket in such a way as to form continuous webs of material.

The object underlying the invention is to develop a device of the kind set forth at the outset in such a way as to largely avoid on a translationally moved slide any positional and tolerance variations perpendicular to the threaded spindle, any offsets and any irregularities of feed in the axial direction. At the same time the device is to exhibit as much stiffness as possible in the axial direction.

According to the invention, this is accomplished in a device of the kind set forth at the outset in that a compensating coupling of cardanic action is provided between the ring nut and the slide.

The compensating coupling is essentially designed in such a way as to consist of a body which is circular or square in cross section and has a central axis, in which body two universal joints arranged one behind the other are composed by diametrically mutually opposed radial slits and by further diametrically mutually opposed radial slits which are staggered axially and through 90 angular degrees.

In particular the compensating coupling is configured in such a way that the slits forming a universal joint are arranged at an acute angle to the central axis of the body such that the four joints of a universal joint are on a plane extending perpendicular to the central axis of the body. In this manner it is ensured that a slide is moved with accuracy of feed in the translatory direction.

The further features and merits are to be gathered from an embodiment of the invention as depicted in the drawings and described below, as well as from the further-sub-claims.

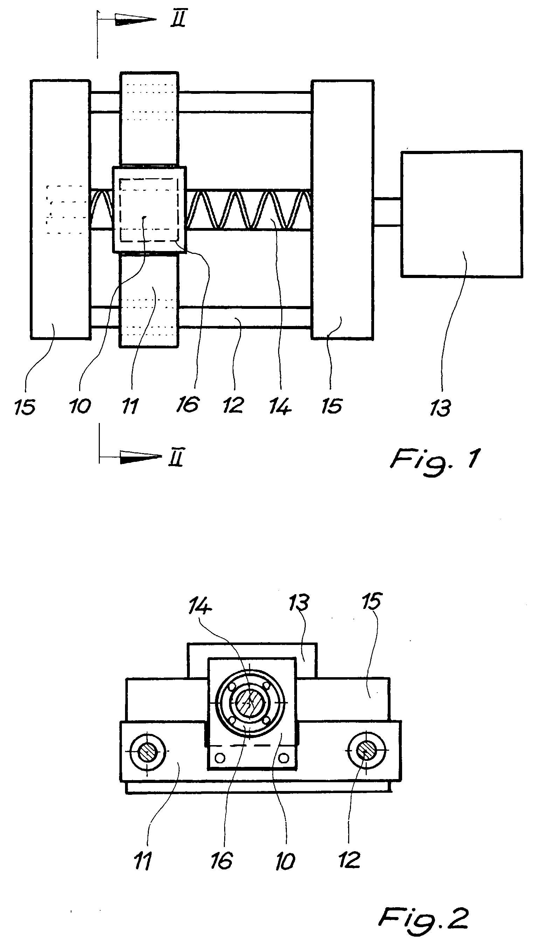

In the drawings
- Fig. 1: is a plan view of the device with the compensating coupling embodying the invention,
- Fig. 2: is a front view of the device according to Fig. 1 in a section taken along line II-II in Fig. 1,

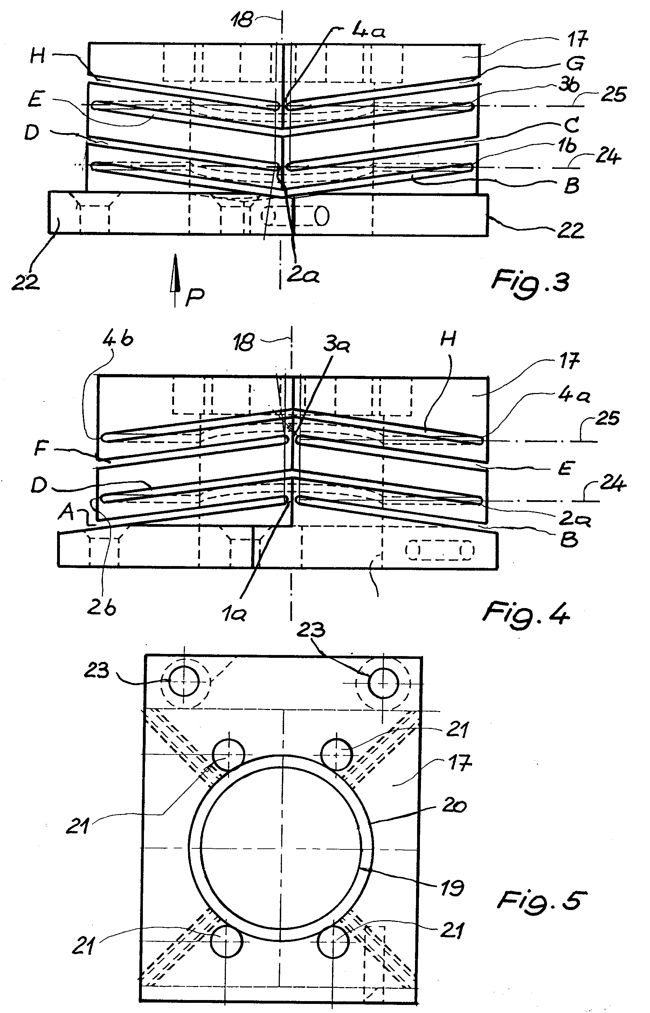

- Fig. 3: is a view of the compensating coupling according to Fig. 1,
- Fig. 4: is the compensating coupling according to Fig. 1 in a view turned through 90 angular degrees as compared to the view in Fig. 3,

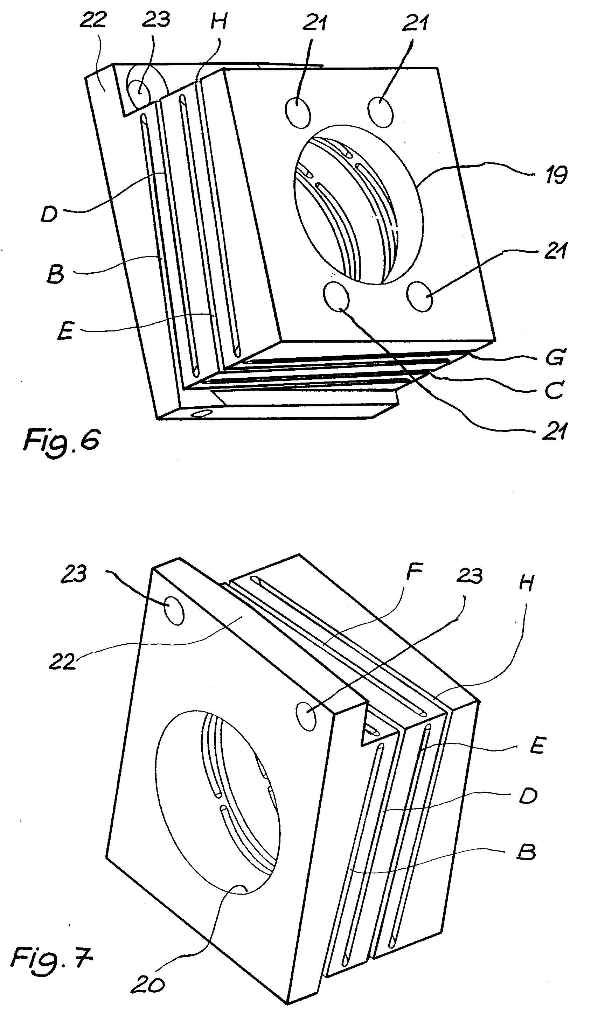

- Fig. 5: is the compensating coupling in a view in the direction of arrow P in Fig. 3,
- Fig. 6: is a perspective view of the compensating coupling,
- Fig. 7: is the compensating coupling in a perspective view turned through 180 angular degrees as compared to the view in Fig. 6,

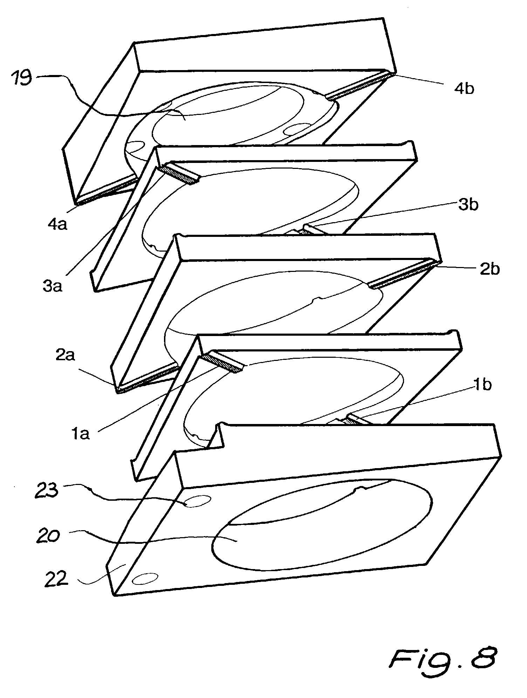

- Fig. 8: is an exploded representation of the compensating coupling and

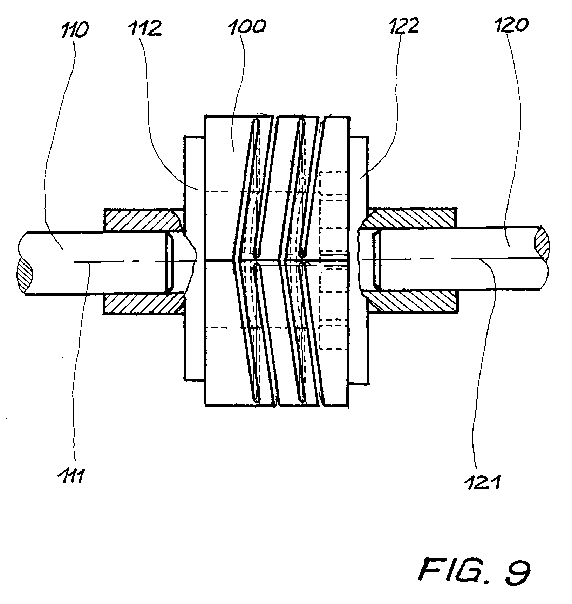

- Fig. 9: is a further embodiment of the compensating coupling.

The depicted embodiment of a compensating coupling 10 serves for the faultless, uniform, translatory motion of a slide 11 reciprocable on two parallel guide rods 12 by a threaded spindle 14 driven by a motor 13. The guide rods 12 and the threaded spindle 14 are held in pillow blocks 15. For this purpose, the compensating coupling 10 is connected on the one hand to a ring nut 16 engaged with the threaded spindle 14 and on the other hand to the slide 11.

In the embodiment, the compensating coupling 10 consists of a body of square cross section produced as a plastic injection moulded part. A bore 19 and a bore 20 of somewhat larger diameter than bore 19 are provided concentrically to the central axis 18 of the body 17. The bores 19 and 20 serve for the passage of the threaded spindle 14 and ring nut 16.

The body 17 is on the one hand provided with tapped holes 21 for the fastening to the ring nut 16 and on the other hand with a flange 22 formed with through holes 23 for fastening the compensating coupling 10 to the slide 11.

The body 17 of the compensating coupling 10 is provided with slits A, B, C, D, E, F, G and H axially symmetrically, diametrically opposed to one another. All the slits are arranged at an acute angle to the central axis 18. Furthermore, adjacent slits are in each case rotationally staggered through 90 angular degrees to one other. Thus the diametrically opposed slits A and B form the joints 1a and 1b. Thus, further, diametrically mutually opposed slits C and D, which are rotationally staggered through 90 angular degrees in relation to slits A and B and are of mirror arrangement with respect to plane 24, form the joints 2a and 2b. The joints 1a, 1b and 2a, 2b compose a first universal joint.

The diametrically mutually opposed slits E and F, which are provided axially spaced but in the same angular arrangement as slits A and B, form the joints 3a and 3b. The diametrically mutually opposed slits G and H, which are rotationally staggered through 90 angular degrees in relation to slits E and F and are of mirror arrangement with respect to plane 25, form the joints 4a and 4b. The slits C and D are of the same angular arrangement as slits G and H. The joints 3a, 3b and 4a, 4b compose a second universal joint.

The joints 1a, 1b are arranged in such a way as to lie together with the joints 2a, 2b on a plane 24 perpendicular to the central axis 18. The joints 3a, 3b are arranged in such a way as to lie together with the joints 4a, 4b on a plane 25 perpendicular to the central axis.

The universal joints 1a, 1b, 2a, 2b and 3a, 3b, 4a, 4b situated axially one behind the other compose the compensating coupling 10 of cardanic action.

As the compensating coupling 10 is fastened to the slide 11 by means of screws passing through the through holes 23 and to the ring nut 16 by means of the tapped holes 21, all irregularities of the threaded spindle 14 are kept away from the slide 11 through the cardanic action of the compensating coupling 10. As a result, the slide 11 performs a defined, uniform, faultless, translatory motion.

The previous embodiment described the use of the compensating coupling 10 for compensating tolerance variations, offsets and irregularities of feed between a driven threaded spindle and a slide to be driven.

In addition, the compensating coupling 10 embodying the invention is also quite generally usable as a compensating coupling 100 of a drive shaft 110 and a driven shaft 120 in order to compensate tolerances in the parallel offset of the central axes 120 and 121 or their angular deviations from the alignment of the central axes 120 and 121. For this purpose one bearing bush 112, 122 is flanged onto each front face of the compensating coupling 100. The drive shaft 100 is held and secured in bearing bush 112 and the driven shaft 120 is held and secured in the bearing bush 122. The compensating coupling 110 enables faultless rotary transmission from the drive shaft 110 to the driven shaft 120 even when the central axes 111 and 121 are not in alignment.

## Claims

1. Device for the translatory displacement of a slide movable by means of a threaded spindle fixedly mounted for rotation, wherein a ring nut axially movable on the threaded spindle is connected to the slide, **characterized in that** a compensating coupling (10) of cardanic action is provided between the ring nut (16) and the slide (11).

2. Device as claimed in claim 1, characterized in that the compensating coupling (10) consists of a body (17) which is circular or square in cross section and has a central axis (18), in which body two universal joints (1a, 1b and 2a, 2 b or 3a, 3b and 4a, 4b) arranged one behind the other are composed by diametrically mutually opposed radial slits (A, B; E, F) and by further diametrically mutually opposed radial slits (C, D; G, H) which are staggered axially and through 90 angular degrees.

3. Device as claimed in claims 1 and 2, characterized in that the slits in each case composing a universal joint (1a, 1b and 2a, 2b or 3a, 3b and 4a, 4b) are arranged at an acute angle to the central axis (18) of the body (17) in such a way that the four joints of a universal joint are on a plane (24, 25) extending perpendicular to the central axis (18) of the body (17).

4. Device as claimed in any one of claims 1 to 3, characterized in that the body (17) has axial bores (19 and 20) for the passage of the threaded spindle (14) and to receive the ring nut (16).

5. Device as claimed in any one of claims 1 to 4, characterized in that one front face of the body (17) is provided with tapped holes (21) for fastening to the ring nut (16).

6. Device as claimed in any one of claims 1 to 5, characterized in that a flange (22) is formed on one front face of the body (17) and is provided with through holes (23) for fastening the compensating coupling (10) to the slide (11).

7. Device as claimed in any one of claims 1 to 6, characterized in that the compensating coupling (10) is produced as a one-piece plastic injection moulded part.

8. Device for transmitting the rotary motion of a drive shaft to a driven shaft, characterized in that a compensating coupling (100) of cardanic action is provided between the drive shaft (110) and the driven shaft (120).

9. Device as claimed in claim 8, characterized in that the compensating coupling (10) consists of a body (17) which is circular or square in cross section and has a central axis (18), in which body two universal joints (1a, 1b and 2a, 2 b or 3a, 3b and 4a, 4b) arranged one behind the other are composed by diametrically mutually opposed radial slits (A, B; E, F) and by further diametrically mutually opposed radial slits (C, D; G, H) which are staggered axially and through 90 angular degrees, and that the slits in each case composing a universal joint (1a, 1b and 2a, 2b or 3a, 3b and 4a, 4b) are arranged at an acute angle to the central axis (18) of the body (17) in such a way that the four joints of a universal joint are on a plane (24, 25) extending perpendicular to the central axis (18) of the body (17).
